# EUROPÄISCHE PATENTSCHRIFT

(11) **EP 2 596 943 B1**
(45) Veröffentlichungstag und Bekanntmachung des Hinweises auf die Patenterteilung: **01.08.2018**
(21) Anmeldenummer: 12192723.0
(22) Anmeldetag: 15.11.2012
(51) Int. Cl.: B29C 70/46, B29C 43/52, B32B 5/26, B32B 5/02, B32B 5/08, B32B 5/28, B32B 1/00, C08J 5/24

(54) **Verfahren zur Herstellung von Faserverbund-Formteilen**
Process for producing fiber composite moldings
Procédé de fabrication de pièces de formage composites en fibres

(30) Priorität: 28.11.2011 EP 11190963
(43) Veröffentlichungstag der Anmeldung: 29.05.2013
(73) Patentinhaber: BASF SE, 67056 Ludwigshafen am Rhein (DE)
(72) Erfinder: Kalbe, Michael, 69469 Weinheim (DE); Scheidhauer, Rainer, 67454 Haßloch (DE)

(56) Entgegenhaltungen:
- EP-A1- 1 459 880
- US-A- 5 007 976
- US-A1- 2010 143 650

## Beschreibung

Die Erfindung betrifft ein Verfahren zur Herstellung von Faserverbund-Formteilen.

Die Herstellung von Formteilen für den Kraftfahrzeugbau erfolgt häufig durch kaltes Verpressen von thermoplastisch gebundenen Naturfaserverbundschichten mit einer thermoplastischen Dekorschicht. Dazu wird die thermoplastisch gebundene Naturfaserverbundschicht als Trägerschicht mittels Infrarotstrahlung auf eine Temperatur von 180 bis 200 °C aufgeheizt, zusammen mit der Dekorschicht in eine kalte Formpresse eingelegt und mit der Dekorschicht kalt verpresst. Die Naturfaserverbundschicht kann als thermoplastischen Binder beispielsweise Polypropylenfasern enthalten.

Nachteilig an diesen rein thermoplastischen Systemen ist das hohe Flächengewicht der Trägerschicht und damit des gesamten Schichtverbundes, das notwendig ist, um die geforderten mechanischen Eigenschaften (E-modul) zu erreichen.

Alternativ dazu kommen duroplastisch gebundene, beispielsweise mit einem Epoxidharz gebundene Naturfaserverbundschichten zum Einsatz. Dabei wird zuerst durch Heißpressen ein Formteil hergestellt, anschließend auf dieses ein Klebstoff aufgetragen, und eine Dekorschicht aufkaschiert.

Die Verfahren nach dem Stand der Technik umfassen jeweils mehrere Verfahrensschritte wie Vorheizen der Trägerschicht mittels Infrarotstrahlung und Verpressen mit der Dekorschicht, bzw. Herstellung der Trägerschicht durch Heißpressen und anschließendem Aufkaschieren der Dekorschicht.

US 2010/143650 A1 offenbart ein Verfahren zur Herstellung von Faserverbund-Formteilen umfassend (i) eine thermovernetzbare Faserverbundschicht als Trägerschicht und (ii) eine thermoplastische Faserverbundschicht als Deckschicht, bei dem die Faserverbundschicht (i) enthaltend einen thermovernetzbaren Binder in einer Formpresse in die gewünschte Form gebracht wird, anschließend die thermoplastische Deckschicht (ii) auf die innere Oberfläche der vorgeformten thermovernetzbaren Faserverbundschicht (i) aufgelegt und in der Formpresse geformt wird.

Aufgabe der Erfindung ist es, ein einfach durchzuführendes Verfahren zur Herstellung von Faserverbund-Formteilen bereitzustellen, bei dem Formgebung und Verbindung der Trägerschicht mit der Dekorschicht in einem Arbeitsgang erfolgen.

Gelöst wird die Aufgabe durch ein Verfahren zur Herstellung von Faserverbund-Formteile umfassend
(i) eine thermovernetzbare Faserverbundschicht als Trägerschicht, und
(ii) eine thermoplastische Faserverbundschicht als Deckschicht,
bei dem die Faserverbundschicht (i) umfassend einen thermovernetzbaren Binder im nicht ausgehärteten Zustand und die thermoplastische Deckschicht (ii) aufeinander gelegt und in einer Formpresse in die gewünschte Form gebracht und thermovernetzt werden, dadurch gekennzeichnet, dass die erste Kontaktfläche der Formpresse, die mit der Trägerschicht Kontakt hat, eine Temperatur im Bereich von 150 bis 250°C und die zweite Kontaktfläche der Formpresse, die mit der Deckschicht in Kontakt steht, eine Temperatur im Bereich von 20 bis 180°C aufweist, wobei die erste Kontaktfläche eine um mindestens 20°C höhere Temperatur als die zweite Kontaktfläche der Formpresse aufweist.

Die zweite, thermoplastische Deckschicht (ii) enthält ein thermoplastisches Material, beispielsweise eine thermoplastischen Faser. Beispielsweise kann die Deckschicht (ii) eine Faserverbundschicht aus Naturfasern und thermoplastischen synthetischen Fasern, beispielsweise Polypropylenfasern, sein. Die thermoplastische Deckschicht (ii) kann auch eine Faserverbundschicht sein, die einen filmbildenden thermoplastischen Binder enthält. Die thermoplastische Deckschicht (ii) kann darüber hinaus ein schwach vernetzendes Additiv enthalten.

Die Deckschicht hat häufig die Funktion einer Dekorschicht und ist häufig hitzeempfindlich.

Die Faserverbundschichten (i) und (ii) können als Fasern ausschließlich synthetische Fasern enthalten. Bevorzugt enthalten die Faserverbundschichten Naturfasern. Beispiele für Naturfasern, die in den Faserverbundschichten enthalten sein können, sind Fasern von Holz, Baumwolle, Sisal, Flachs, Kenaf, Hanf, Ölleinen und Jute. Bevorzugte Fasern für die Deck- oder Dekorschicht (ii) sind Flachs, Hanf und Kenaf.

Die Faserverbundschichten (i) und (ii) liegen ganz allgemein in Form eines textilen Flächengebildes vor. Besonders geeignet sind Vliese (Stapelfasern oder Spinvliese), aber auch Gewebe und Gewirke sind möglich. Bevorzugt sind Vliese aus Naturfasern, beispielsweise Vliese aus Flachs, Hanf und Kenaf.

Die Naturfasern können im Gemisch mit synthetischen Fasern vorliegen, beispielsweise im Gemisch mit Fasern aus Polypropylen, Polyethylen, Polyester, Polyamid oder Polyacrylnitril. Der Anteil an Kunststoffasern kann bis zu 50 Gew.-% betragen, bevorzugt beträgt er bis zu 30 Gew.-% und besonders bevorzugt bis zu 10 Gew.-%. In einer insbesondere bevorzugten Ausführungsform liegen keine synthetischen Fasern neben den Naturfasern vor.

In einer weiteren Ausführungsform der Erfindung enthalten die Faserverbundschichten (i) oder (ii) ausschließlich synthetische Fasern, beispielsweise die oben genannten synthetischen Fasern, oder Polyesterfasern aus PET oder PBT.

Die Vliese können mechanisch, thermisch oder chemisch vorgebunden sein. Thermisch vorgebundene Vliese können beispielsweise durch Mitverwendung synthetischer Bindefasern und thermischer Behandlung in einem Kalander erhalten werden.

Vorzugsweise enthält die Faserverbundschicht (i), die als Trägerschicht fungiert, Naturfasern aus Holz, Flachs, Hanf und Kenaf.

Die Faserverbundschicht (ii), die als Deckschicht fungiert, enthält vorzugsweise Naturfasern aus Flachs, Kenaf, Hanf, Sisal und Baumwolle.

Die Deckschicht ist häufig gleichzeitig eine Dekorschicht aus thermisch empfindlichem Material. Beispiele für thermisch empfindliche Dekorschichten sind Schichten aus Synthese- und Naturfasergemischen.

Die Vliese, Gewebe und Gewirke der Trägerschicht werden mit einem thermovernetzbaren Bindemittel imprägniert. Geeignete thermovernetzbare Bindemittel sind Bindemittel auf Basis vernetzbarer Polyacrylsäuren, Acrylsäure/Maleinsäure-Copolymere, Formaldehydharze, wie Harnstoff-Formaldehydharze (UF-Harze), Phenol-Formaldehydharze (PF-Harze), Melamin-Formaldehydharze (MF-Harze) und Melamin-Harnstoff-Formaldehydharze (MUF-Harze), weiterhin vernetzbare wässrige Dispersionen, wie vernetzbare Styrol-Butadien-Dispersionen, Styrol-Acrylat-Dispersionen und reine Acrylat-Dispersionen.

Bevorzugte duroplastisch aushärtende Bindemittel sind thermovernetzbare Polyacrylsäure, Acrylsäure/Maleinsäure-Copolymere, thermovernetzbar Polyurethane sowie thermovernetzbare Epoxidharze.

In einer besonders bevorzugten Ausführungsform der Erfindung werden thermovernetzbare Bindemittel auf Basis von Acrylsäure/Maleinsäure-Copolymere und Triethanolamin als Vernetzer, wie sie beispielsweise in EP 0 882 093 B1 beschrieben sind, als Bindemittel für die Vliese, Gewebe und Gewirke verwendet.

Die Trägerschicht wird im Allgemeinen mit einem duroplastisch aushärtbaren Bindemittel vorgebunden und in nicht ausgehärteter Form eingesetzt. Dadurch weist die Trägerschicht eine hohe Flexibilität auf und kann leicht verformt werden.

Die Deckschicht enthält vorzugsweise ein thermoplastisches Bindemittel. Beispiele sind filmbildende thermoplastische Polyurethandispersionen, Styrol-Acrylat-Dispersionen oder Reinacrylat-Dispersionen. Als thermoplastisches Bindemittel kommen auch thermoplastische synthetische Fasern, wie Polypropylenfasern, in Frage.

Auf die Deckschicht kann als weitere Schicht eine Dekorschicht aus thermoplastischem Material aufkaschiert werden, beispielsweise eine Dekorfolie aus PVC oder Polyolefin. Die Funktion der Dekorschicht kann aber auch von der Deckschicht (ii) übernommen werden.

Durch Verwendung eines duroplastisch aushärtenden Bindemittels kann die Dicke und damit das Flächengewicht der Trägerschicht und damit des gesamten Schichtverbundes aus Trägerschicht und Deckschicht gegenüber einem rein thermoplastischen Schichtverbund verringert werden.

Das Flächengewicht der Trägerschicht im trockenen, nicht ausgehärteten Zustand beträgt im Allgemeinen 500 bis 1500, bevorzugt 600 bis 1000 g/m². Das Flächengewicht der Deckschicht im trockenen Zustand beträgt im Allgemeinen 50 bis 1500, bevorzugt 200 bis 600 g/m².

Die Faserverbund-Formteile werden durch thermisches Verformen des Schichtverbundes und Thermovernetzung des Binders hergestellt. Dazu werden die Trägerschicht im nicht ausgehärteten Zustand und die Deckschicht aufeinander gelegt und in einer Heißpresse in die gewünschte dreidimensionale Form gebracht, wobei die Trägerschicht (i) thermovernetzt wird. Das Aushärten der Trägerschicht (i) erfolgt dabei in der Heißpresse. Gemäß der Offenbarung weist die erste Kontaktfläche der Formpresse, die mit der Trägerschicht Kontakt hat, eine höhere Temperatur als die zweite Kontaktfläche der Formpresse, die mit der Deckschicht in Kontakt steht, auf. Dadurch ist es möglich, die Trägerschicht duroplastisch auszuhärten, ohne dass die thermisch empfindlichere Deckschicht geschädigt wird.

Erfindungsgemäß liegt die Temperatur der ersten Kontaktfläche der Formpresse im Bereich von 150 bis 250 °C und die Temperatur der zweiten Kontaktfläche der Formpresse im Bereich von 20 bis 180 °C. Bevorzugt liegt die Temperatur der ersten Kontaktfläche der Formpresse im Bereich von 170 bis 220 °C und die Temperatur der zweiten Kontaktfläche der Formpresse im Bereich von 100 bis 170 °C.

Erfindungsgemäß weist die erste Kontaktfläche eine um mindestens 20 °C, bevorzugt eine um mindestens 30 °C höhere Temperatur als die zweite Kontaktfläche der Formpresse auf. Vorzugsweise beträgt dieser Temperaturunterschied 20 bis 80 °C, besonders bevorzugt 30 bis 70 °C.

Das Flächengewicht des erhaltenen Schichtverbundes beträgt im Allgemeinen 1000 bis 2000 g/m², bevorzugt 1200 bis 1600 g/m². Die Schlagzähigkeit nach Charpy (nach ISO 179) beträgt im Allgemeinen 8 bis 30 kJ/m², vorzugsweise 15 bis 25 kJ/m². Das E-Modul (nach DIN 14125) beträgt im Allgemeinen 2500 bis 9000 N/mm², bevorzugt 4000 bis 8000 N/mm².

Im Allgemeinen liegt das Verhältnis der Flächengewichte von Trägerschicht zu Deckschicht im Bereich von 5 : 1 bis 2 : 1, vorzugsweise von 4 : 1 bis 2,5 : 1, beispielsweise bei ca. 3 : 1.

Durch den Schichtverbund aus duroplastisch ausgehärteter Trägerschicht und thermoplastischer Deckschicht können Elastizitätsmodul und Schlagzähigkeit nahezu unabhängig voneinander eingestellt werden. Außerdem erfordert die Formgebung und Verbindung der Trägerschicht mit der Dekorschicht nur einen Arbeitsgang.

Die so erhältlichen Faserverbund-Formteile weisen in einer Ausführungsform die Form von Kraftfahrzeug-Innenraumteilen, beispielsweise die Form von Türträgern, Mittelkonsolen, Instrumententafeln, Sitzrückverkleidungen, Hutablagen und dergleichen, auf und werden im Kraftfahrzeugbau als solche verwendet.

### Beispiele

Naturfaserverbundplatten mit einer mit Emuldur® gebundenen Deckschicht zur Verbesserung der mechanischen Eigenschaften.

### Beispiel 1

Herstellung einer Sandwich - Konstruktion aus einem mit Acrodur® gebundenen Naturfaservlies als Träger und einer mit Emuldur® gebundenen leichteren Deckschicht.

### Beispiel 1a

Imprägnierung einer Naturfasermatte zur Trägerherstellung
Naturfasermatte: Hanf / Kenf 30 zu 70 mit einem Flächengewicht von 1000 g/m² Binder: Acrodur® DS 3515 (Acrylsäure/Maleinsäure-Copolymer mit Triethanolamin als Vernetzer)
Binderkonzentration: 50 Gew.-% in Wasser
Binderauftrag: soll 28 %, bezogen auf Trockenmasse
Binderdichte (Schaum): 450 bis 500 g/L

Die zu imprägnierenden Vliese werden auf eine Größe von 34 x 28 cm zugeschnitten und gewogen. Eine entsprechende Bindermenge wird in einem Kenwood-Mixer von Typ Major vorgelegt und durch Rühren auf eine Dichte von 450 bis 500 g/L geschäumt. Die Überprüfung der Schaumdichte findet mittels eines Bechers statt, der ein Volumen von 100 cm³ hat. Der Becher wird tariert, anschließend vollständig mit dem Schaum gefüllt und zurück gewogen.

Zur Bestimmung des Schaumgewichts wird der auf der Waage abgelesene Wert mit 10 multipliziert. Der so erhaltene stabile Schaum wird mit einem horizontal betriebenen Walzenstuhl der Firma Mathis Typ HVF auf die Matte appliziert. Dazu werden die Walzen auf einen definierten Abstand zusammengefahren und mit einem Gegendruck von 4 bis 6 bar beaufschlagt. Der Spalt zwischen den Walzen wird mit dem Bindemittelschaum gefüllt, und die Walzen werden mit einer Geschwindigkeit von 2 m/Min. angetrieben. Die zu imprägnierenden Mattenstücke werden von oben senkrecht dem Spalt zugeführt und durch die sich drehende Walze durch den Spalt transportiert. Dabei wird das Bindemittel gleichmäßig und beidseitig in die Matte gedrückt. Die Auftragsmenge kann durch den eingestellten Spalt und den Anpressdruck eingestellt werden.

Das so erhaltene Halbzeug - Naturfasermatte und Bindemittel - wird gewogen und die Naßbinderaufnahme bestimmt. In einem Umluftrockenschrank wird bei einer Temperatur von 90 °C auf eine Restfeuchte von 17 % getrocknet.

### Beispiel 1b

Imprägnierung einer Naturfasermatte zur Herstellung der Deckschicht
Naturfasermatte: 100 % Flachs mit einem Flächengewicht von 220 g/m²
Binder: Emuldur® (therplastische Polyurethan-Dispersion)
Binderkonzentration: 40 % in Wasser
Binderauftrag: soll 25 %, bezogen auf Trockenmasse
Binderdichte: Flotte nicht geschäumt

Wie oben beschrieben, allerdings wird der Binder ungeschäumt in den Spalt des Walzenstuhls gefüllt. Beide Walzen sind auf Kontakt zugefahren. Der Walzenanpressdruck beträgt 4 bar. Nach Bestimmung der Auftragsmenge werden diese Halbzeuge auf eine Restfeuchte von 0 % getrocknet.

### Besipiel1 c

Herstellung der Sandwichkonstruktionen aus Träger und Deckschicht.

Jeweils ein Trägervlies und eine Deckschicht im Format 34 x 28 cm werden in einem Schritt zu einem Bauteil von 2,2 mm Dicke auf einer Presse der Firma Vogt verpresst. Die Kontaktfläche für den Träger hat eine Temperatur von 200 °C, die Flächentemperatur für die mit Emuldur®gebundene Oberfläche liegt bei 150 °C. Bei einem Flächendruck von etwa 30 bar wird nach einem Lüftungshub von 5 Sekunden 45 Sekunden verpresst. Die so erhaltene Platte kann formstabil und ohne Anklebungen entnommen werden.

### Vergleichsbeispiel

### Trägerschicht ohne Deckschicht

Zum Vergleich wurde eine Naturfasermatte aus Hanf/Kenf im Verhältnis im Verhältnis 30 zu 70 mit einem Flächengewicht von 1000 g/m² wie in Beispiel 1a beschrieben beschichtet und getrocknet und wie in Beispiel 1c beschrieben, aber ohne Deckschicht, verpresst.

### Beispiel 2

### Bestimmung der mechanischen Eigenschaften

Zur Bestimmung der mechanischen Kenngrößen werden entsprechende Probekörper ausgearbeitet und nach Lagerung von 24 Stunden im Normklima geprüft. Durch die erfindungsgemäße Konstruktion stellen sich bei einem unverändert hohem E-Modul deutlich höhere Schlagzähigkeiten ein. Bei einer Bauteildichte von 0,9 g/cm³ und einer Dicke von 1,8 mm zeigen sich folgende Kenngrößen:
Schlagzähigkeit [Charpy ISO 179]
Vergleichsbeispiel = 9 kJ/m²
Neue Sandwich - Konstruktion = 25 kJ/m²

E-Modul [DIN 14125]
Vergleichsbeispiel = 4500 N/mm²
Neue Sandwich - Konstruktion = 4700 N/mm²

Wasseraufnahme [DIN 52364] nach 24 Stunden
Vergleichsbeispiel = 45 %
Neue Sandwich - Konstruktion = 30 %

Quellung [DIN 52364] nach 24 Stunden
Vergleichsbeispiel = 26 %
Neue Sandwich - Konstruktion = 10 %

## Patentansprüche

1. Verfahren zur Herstellung von Faserverbund-Formteilen umfassend
(i) eine thermovernetzbare Faserverbundschicht als Trägerschicht, und
(ii) eine thermoplastische Faserverbundschicht als Deckschicht,
bei dem die Faserverbundschicht (i) umfassend einen thermovernetzbaren Binder im nicht ausgehärteten Zustand und die thermoplastische Deckschicht (ii) aufeinander gelegt und in einer Formpresse in die gewünschte Form gebracht und thermovernetzt werden, **dadurch gekennzeichnet, dass** die erste Kontaktfläche der Formpresse, die mit der Trägerschicht Kontakt hat, eine Temperatur im Bereich von 150 bis 250°C und die zweite Kontaktfläche der Formpresse, die mit der Deckschicht in Kontakt steht, eine Temperatur im Bereich von 20 bis 180C° aufweist, wobei die erste Kontaktfläche eine um mindestens 20°C höhere Temperatur als die zweite Kontaktfläche der Formpresse aufweist.

2. Verfahren nach Anspruch 1, **dadurch gekennzeichnet, dass** die thermovernetzbare Faserverbundschicht (i) Naturfasern enthält.

3. Verfahren nach Anspruch 1 oder 2, **dadurch gekennzeichnet, dass** die thermoplastische Deckschicht (ii) Naturfasern enthält.

4. Verfahren nach Anspruch 2 oder 3, **dadurch gekennzeichnet, dass** die Naturfasern ausgewählt sind aus Fasern von Holz, Baumwolle, Sisal, Flachs, Hanf, Ölleinen, Kenaf und Jute.

5. Verfahren nach einem der Ansprüche 1 bis 4, **dadurch gekennzeichnet, dass** der thermovernetzbare Binder der ersten Faserverbundschicht ein duroplastisch aushärtender Binder ist.

6. Verfahren nach Anspruch 5, **dadurch gekennzeichnet, dass** der duroplastisch aushärtende Binder ausgewählt ist aus thermovernetzbarer Acrylsäure, thermovernetzbaren Acrylsäure/Maleinsäure-Copolymeren, thermovernetzbaren Polyurethanen sowie thermovernetzbaren Epoxidharzen.

7. Verfahren nach einem der Ansprüche 1 bis 6, **dadurch gekennzeichnet, dass** die Deckschicht (ii) eine temperaturempfindliche Dekorschicht ist.

8. Verfahren nach einem der Ansprüche 1 bis 6, **dadurch gekennzeichnet, dass** auf die Deckschicht (ii) eine zusätzliche Dekorschicht (iii) aufkaschiert wird.

9. Verfahren nach einem der Ansprüche 1 bis 8, **dadurch gekennzeichnet, dass** das Flächengewicht der Trägerschicht im trockenen, nicht ausgehärteten Zustand im Bereich von 600 bis 1000 g/m² und das Flächengewicht der Deckschicht im trockenen Zustand im Bereich von 200 bis 600 g/m² liegt.

10. Verfahren nach einem der Ansprüche 1 bis 9, **dadurch gekennzeichnet, dass** die Temperatur der ersten Kontaktfläche der Formpresse im Bereich von 170 bis 220 °C und die Temperatur der zweiten Kontaktfläche der Formpresse im Bereich von 100 bis 170 °C liegt.

11. Verfahren nach einem der Ansprüche 1 bis 10, **dadurch gekennzeichnet, dass** die erste Kontaktfläche der Formpresse eine um mindestens 30 °C höhere Temperatur als die zweite Kontaktfläche der Formpresse aufweist.

## Claims

1. A process for producing fiber composite moldings comprising
(i) a thermally crosslinkable fiber composite layer as backing layer, and
(ii) a thermoplastic fiber composite layer as overlayer,
by mutually superposing the fiber composite layer (i) comprising a thermally crosslinkable binder in the unhardened state and the thermoplastic overlayer (ii), and, in a molding press, converting them to the desired form and thermally crosslinking the same, which comprises a temperature of the first contact area of the molding press, where this has contact with the backing layer, in the range from 150 to 250°C and a temperature of the second contact area of the molding press, where this is in contact with the overlayer, in the range from 20 to 180°C, where the temperature of the first contact area is higher by at least 20°C than that of the second contact area of the molding press.

2. The process according to claim 1, wherein the thermally crosslinkable fiber composite layer (i) comprises natural fibers.

3. The process according to claim 1 or 2, wherein the thermoplastic overlayer (ii) comprises natural fibers.

4. The process according to claim 2 or 3, wherein the natural fibers have been selected from the fibers of wood, cotton, sisal, flax, hemp, linseed, kenaf, and jute.

5. The process according to any one of claims 1 to 4, wherein the thermally crosslinkable binder of the first fiber composite layer is a thermoset binder.

6. The process according to claim 5, wherein the thermoset binder has been selected from thermally crosslinkable acrylic acid, thermally crosslinkable acrylic acid/maleic acid copolymers, thermally crosslinkable polyurethanes, and thermally crosslinkable epoxy resins.

7. The process according to any of claims 1 to 6, wherein the overlayer (ii) is a temperature-sensitive decorative layer.

8. The process according to any of claims 1 to 6, wherein an additional decorative layer (iii) is laminated onto the overlayer (ii).

9. The process according to any of claims 1 to 8, wherein the weight per unit area of the backing layer in the dry, unhardened state is in the range from 600 to 1000 g/m², and the weight per unit area of the overlayer in the dry state is in the range from 200 to 600 g/m².

10. The process according to any of claims 1 to 9, wherein the temperature of the first contact area of the molding press is in the range from 170 to 220°C, and the temperature of the second contact area of the molding press is in the range from 100 to 170°C.

11. The process according to any of claims 1 to 10, wherein the temperature of the first contact area of the molding press is higher by at least 30°C than that of the second contact area of the molding press.

## Revendications

1. Procédé de fabrication de pièces moulées de composite fibreux, comprenant :
(i) une couche de composite fibreux réticulable thermiquement en tant que couche support et
(ii) une couche de composite fibreux thermoplastique en tant que couche de recouvrement,
selon lequel la couche de composite fibreux (i) comprenant un liant réticulable thermiquement à l'état non durci et la couche de recouvrement thermoplastique (ii) sont disposées l'une sur l'autre, et mises sous la forme souhaitée et réticulées thermiquement dans une presse de moulage, **caractérisé en ce que** la première surface de contact de la presse de moulage, qui est en contact avec la couche support, présente une température dans la plage allant de 150 à 250 °C et la deuxième surface de contact de la presse de moulage, qui est en contact avec la couche de recouvrement, présente une température dans la plage allant de 20 à 180 °C, la première surface de contact présentant une température au moins 20 °C supérieure à la deuxième surface de contact de la presse de moulage.

2. Procédé selon la revendication 1, **caractérisé en ce que** la couche de composite fibreux réticulable thermiquement (i) contient des fibres naturelles.

3. Procédé selon la revendication 1 ou 2, **caractérisé en ce que** la couche de recouvrement thermoplastique (ii) contient des fibres naturelles.

4. Procédé selon la revendication 2 ou 3, **caractérisé en ce que** les fibres naturelles sont choisies parmi les fibres de bois, de coton, de sisal, de lin, de chanvre, de lin oléagineux, de kénaf et de jute.

5. Procédé selon l'une quelconque des revendications 1 à 4, **caractérisé en ce que** le liant réticulable thermiquement de la première couche de composite fibreux est un liant à durcissement duroplastique.

6. Procédé selon la revendication 5, **caractérisé en ce que** le liant à durcissement duroplatique est choisi parmi l'acide acrylique réticulable thermiquement, les copolymères d'acide acrylique/acide maléique réticulables thermiquement, les polyuréthanes réticulables thermiquement et les résines époxyde réticulables thermiquement.

7. Procédé selon l'une quelconque des revendications 1 à 6, **caractérisé en ce que** la couche de recouvrement (ii) est une couche décorative sensible à la température.

8. Procédé selon l'une quelconque des revendications 1 à 6, **caractérisé en ce qu'**une couche décorative supplémentaire (iii) est stratifiée sur la couche de recouvrement (ii).

9. Procédé selon l'une quelconque des revendications 1 à 8, **caractérisé en ce que** le poids superficiel de la couche support à l'état sec non durci se situe dans la plage allant de 600 à 1 000 g/m² et le poids superficiel de la couche de recouvrement à l'état sec se situe dans la plage allant de 200 à 600 g/m².

10. Procédé selon l'une quelconque des revendications 1 à 9, **caractérisé en ce que** la température de la première surface de contact de la presse de moulage se situe dans la plage allant de 170 à 220 °C et la température de la deuxième surface de contact de la presse de moulage se situe dans la plage allant de 100 à 170 °C.

11. Procédé selon l'une quelconque des revendications 1 à 10, **caractérisé en ce que** la première surface de contact de la presse de moulage présente une température au moins 30 °C supérieure à la deuxième surface de contact de la presse de moulage.
